# EUROPEAN PATENT APPLICATION

(11) **EP 4 379 485 A1**
(43) Date of publication of application: **05.06.2024**
(21) Application number: 22210136.2
(22) Date of filing: 29.11.2022
(51) Int. Cl.: G05B 19/418, G05B 17/02

(54) **INDUSTRIAL INTERACTION SYSTEM AND A METHOD FOR INTERACTION**

(71) Applicant: Siemens Aktiengesellschaft, 80333 München (DE)
(72) Inventor: Michailow, Nicola, 81825 München (DE); Zeiger, Florian, 85635 Höhenkirchen-Siegertsbrunn (DE)
(74) Representative: Siemens Patent Attorneys

(57) **Abstract**

The disclosed embodiments relate to an interaction system and a method for interacting with an industrial system, wherein a network at least indirectly associating one or more industrial entities with one or more digital twins is configured using at least a scope and/or an intent of at least one operator. The industrial system merges the industrial entities with their digital twins thereby providing a common system management and orchestration of physical and digital assets. Digital representations of the digital twins advantageously enable the usage optimization of limited physical representations of the industrial entities.

## Description

### TECHNICAL FIELD

The invention relates to an interaction system and a method for interaction between an operator and a model of a technical system.

### BACKGROUND

Industrial interaction systems are generally known in the art and used, for example, in the field of automation technology, in production or machine tools, in diagnostic or service support systems and in the operation and maintenance of complex components, devices and systems, in particular industrial or medical systems.

Interaction systems are used to support human or nun-human operators of technical systems. Human operators may be supported with the help of an enriched situation display in coping with set-up and maintenance work. An enriched representation of the situation is also known as »Augmented Reality« by which the perceived reality of an operator is supplemented or replaced with computer-generated information or virtual assets. As a distinction to this, a solely artificial representation is referred to as »Virtual Reality« by which a virtual space is generated that does not exist in the real world.

Data glasses may provide a basis for augmenting the visual reality as perceived by a human operator. An industrial operator equipped with data glasses may, for example, look at an asset of a technical system, which is simultaneously detected by an optical detection unit of the data glasses. The asset may be a physical device such as a measuring device, a processing machine, a sensor, an electric motor, etc. The asset may also be a logical entity such as a dataset, a database, an application etc.

In the course of a computer-assisted evaluation of the optically recorded asset, additional information or virtual assets may be available for this asset, which the operator may select for further operations or retrieving additional information. Additional information may include, for example, technical manuals or maintenance instructions. Purely virtual assets may enhance the perceptible situation through optical overlay or superimposition.

Evolving this concept of providing additional information to a »real« or tangible asset has led to the concept of a »digital twin«. A digital twin is a virtual representation of a real-world physical component, device, system or process which is referred to as a physical twin. The digital twin is a synchronized digital counterpart of the physical twin for digital operations, such as system simulation, integration, testing, monitoring, and maintenance.

A digital twin may, in a simplest case, refer to a model of a technical device, system or process. Physical items twinning their digital twin may include electronic devices, processing machines, or even large installations such as a production plant or factory. A digital twin may refer to a description of a component, device, system or process by a set of well aligned, descriptive and executable models. The digital twin may be a semantically linked collection of digital artefacts including design and engineering data, operational data and behavioral models. It may evolve with the real system along the whole life cycle and integrate currently available and commonly required data and knowledge.

Because digital twins may consolidate massive amounts of information on individual assets and groups of assets, digital twins may communicate with each other to digital factory models of multiply linked digital twins.

A representative service that provides augmented reality or virtual reality to users in a fully immersive experience is known as a »metaverse«. The term metaverse is composed of a prefix »meta«, meaning to transcend, and universe, meaning the holistic world. Digital twins combined with immersive technologies may alter the way that industrial operators interact with industrial entities, as they provide a more natural and immersive interaction with the digital world.

The industrial metaverse is based on a concept that has evolved further than that of a virtual reality environment, providing a virtual environment which may built upon a metaphor of an industrial environment - such as an industrial working area or a database rendered »tangible« by virtualization techniques - but, in most cases, without the physical limitations of the real industrial environment. In an exemplary use case, engineers wearing virtual reality headsets may gather around an engine bay of a prototype vehicle in order to check a fit of newly designed parts. The metaverse, if desired, may hide limitations of the real industrial environment in that struts of the engine bay may contain burrs which may result in injuries of human personal when checking the fit of the newly designed parts. Hereinafter, augmented and/or virtual reality representations including industrial metaverse representations are commonly referred to as interaction systems.

Due to an increasing use of digital twins in many application domains, more and more real physical components have to be linked to their digital twins and more and more digital twins are to be linked to each other. A multiplicity of digital twins linked to each other may eventually lead to a network of digital twins or, to be distinguished from, to a digital network twin. While the latter digital network twin may express a digital counterpart of a physical network, the former network of digital twins may express digital twins interacting or being interworked according to their physical counterparts.

A continuous, fast, reliable, and secure data exchange between digital twins and their real counterparts is a prerequisite for providing a reliable digital copy of real objects at all times. Or, in other words, a digital twin steadily providing a state close-to-reality may require a constantly high data rate.

A network control may be deployed to configure, control, and monitor the data exchange network, or briefly monitoring network, which connects the digital twins with their real counterparts. The network control may guarantee a network operation, which at least provides an operation of the digital twins according to the basic demands of the operators of the physical components - ideally in alignment with the capabilities of the physical network.

Such network controls, however, are currently unable to assess or even predict fluctuations in the data rate being due to increasing data exchanges of twinning partners. Their bandwidth requirements become even more unpredictable when the digital twin of an industrial entity is controlled, operated, or read out using a virtual or augmented reality interaction system by which the industrial environment is virtualized or augmented for an operator.

Accordingly, there is a need in the art for a computer-implemented method for interacting with an industrial system using a virtual or augmented reality interaction system being capable to adapt a network associating one or more industrial entities with their digital twins so that the network configuration is automatically adapted to bandwidth fluctuations due to the interaction of an operator with the industrial system.

### SUMMARY AND DESCRIPTION

The present invention relates to a computer-implemented method for interacting with an industrial system. The method includes the steps of:
a) generating a scene representation based on an automated analysis of a imaging input, the imaging input comprising a view of an operator in an industrial environment during interacting with said industrial system, the automated analysis comprising identifying one or more industrial entities in the industrial environment;
b) correlating the one or more industrial entities with one or more digital twins, each of said digital twins at least partially modelling a functionality of the correlated industrial entity, said digital twins being instantiated in a digital environment functionally representing at least parts of the industrial environment;
c) defining an interaction extent dataset by determining a selection of digital twins being correlated with industrial entities as acquired by the view of the operator;
d) defining an interaction intent dataset by extrapolating an anticipated reciprocal functionality of the instantiated digital twins in the digital environment; and;
e) using said interaction extent datasets and/or said interaction intent datasets for configuring a network at least indirectly associating said one or more industrial entities with said one or more digital twins.

The present embodiments further relate to an interaction system comprising one or more processors and on or more data storage entities having stored thereon computer executable program code, which, when executed by the one or more processors, causes the one or more processors to perform the above method.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: is a schematic representation of an exemplary interaction system; and;
- FIG. 2:: is a block diagram depicting functional elements of an exemplary visualization module for generating a scene representation based on an automated analysis of an imaging input on the left and an exemplary industrial entity on the right;
- FIG. 3:: is a block diagram of a possible representation of a digital twin including in which hardware is included for executing the functionality of the digital twin; and;
- FIG. 4:: is a schematic representation of an exemplary interaction system according to the present embodiments.

### DETAILED DESCRIPTION

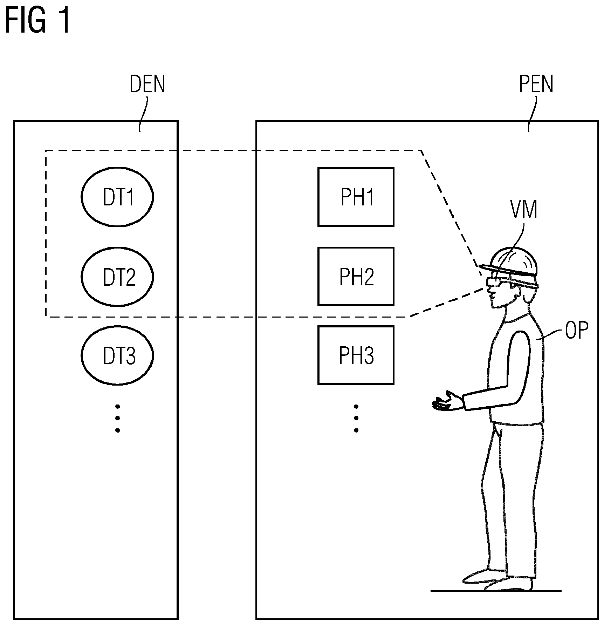

FIG. 1 depicts a functional block diagram of an interaction system in an industrial environment which, for reasons of clarity, is only partially in relation to the actual interaction system.

The interaction system may comprise a preferably binocular visualization module VM for generating and visualizing a scene representation for an operator OP based on an automated analysis of an imaging input, e.g. provided by a camera or alternative imaging arrangements in the non-visible spectrum, attached to, or integrated in the visualization module VM. The visualization module VM may be capable to augment or replace the operator's view of the real world by virtual objects in the correct position in the operator's field of vision. The binocular visualization module VM may be preferably carried in the operator's head area, serving to visualize virtual objects in the correct position in the operator's view or field of vision.

The binocular visualization module VM may be supplemented by further modules - not shown - for providing commands or inputs by the operator to the interaction system. Such modules may be designed to be worn on a human body comprising one or more gesture detection units mounted in an arm area of the operator OP. These gesture detection units may include a plurality of inertial sensors for detecting gestures, i.e. movement, rotation and/or position of the operator's arms.

Furthermore, a scene representation control unit - not shown - for controlling the visualization unit VM may be provided for recognizing the gestures detected by the gesture detection unit and for processing the interaction of the operator with the objects to be triggered by the gestures of the operator. The scene representation control unit may be arranged on the operator's body or, preferably, integrated in the visualization unit VM or in one of the gesture detection modules.

Interaction systems using digital twin platforms as envisaged by an industrial metaverse will in future allow to attach many digital layers to a single physical environment, location, or asset. The schematic representation of an exemplary interaction system as shown in Fig. 1 includes two sections, a physical industrial environment PEN and a digital environment DEN. The industrial environment PEN may encompass »real-world« or substantially tangible - or at least assignable - entities such as physical components, devices, systems, or processes which are hereinafter referred to as industrial entities PH1, PH2, PH3. The digital environment DEN may encompass, host, or allow execution of virtual representations of these respective industrial entities PH1, PH2, PH3. Theses virtual representations are hereinafter referred to as digital twins DT1, DT2, DT2.

For the task of configuring a first industrial entity PH1 - which may be a tangible field device such as an IoT or Internet-of-Things device - the operator OP will not operate tangible controls on this industrial entity PH1 as he used to.

Instead, the operator OP operates virtual controls virtually displayed by the visualization module VM. A suitable cooperation between the digital environment DEN and the visualization module VM for virtualizing the contents by the visualization module VM may vary depending on the distribution of the computing resources between the digital environment DEN and the visualization module VM. It remains to be noted that this cooperation involves exchange data, which, due to the massive volume of data exchanged, requires one or more data highbandwidth data transport routes.

The operator OP, in other words, operates virtual controls which are virtually generated by the digital environment and/or visualized by the visualization module VM. The operations of the operator OP are perceived by - not shown - input units - such as gesture or voice input units cooperating with the visualization module VM - and - over several data transport routes - eventually processed in the digital environment DEN. As a result of this operation, the industrial entity PH1 will be configured by the digital environment DEN, including data transport routes in the reverse direction.

Behavioral and/or procedural courses of action performed by the operator OP may be detected by the interaction system and may be used for anticipating consecutive courses of action with the purpose of extrapolating said further courses of action to eventually capture an intent of the operator and constituting an interaction intent dataset. The interaction intent dataset may influence a quality of service or QoS requirement of a - not shown - network for associating one or more industrial entities PH1, PH2, PH3 with one or more digital twins DT1, DT2, DT2.

While the digital environment DEN has so far been vaguely identified as the endpoint of this data exchange, this endpoint is now further specified by a more detailed characterization. In the drawing, an area delimited by a dashed line is shown, the area enclosing two industrial entities PH1, PH2 and two corresponding digital twins DT1, DT2, the latter digital twins DT1, DT2 being a more detailed characterization of digital endpoints of the data exchange.

It is assumed that the physical assets in the industrial environment PEN have to be configured by selecting and using their digital counterparts on request of the operator. This random and possibly temporary assignment between industrial entities PH1, PH2 and corresponding digital twins DT1, DT2 requires logical links in a - not shown -network connecting the industrial entities PH1, PH2 and their corresponding digital twins DT1, DT2 for exchanging data between the industrial and digital twins. An establishment of logical links over a network includes network and computing elements on the route of the logical links and in the digital environment DEN itself to embody the desired digital layer of a digital twin in the digital environment DEN.

Credited to nowadays cognitive network management systems, an establishment of logical links over a network merely involves setting or amending configuration parameters for establishing routes, slices or areas with configurable Quality of Service. This configuration of the network has to be seen in contrast to past network management measures requiring reconnecting or deploying network devices such as switches and routers. Accordingly, hereinafter, the term »configuring a network« may include acts of triggering cognitive functions and associated implementation options with respect to varying levels of centralization or distribution in cognitive network management systems and/or acts of operating, administering, and managing (OAM) functions to be added to the networks. These OAM functions may be enabled to learn an environment, an optimal behavior fitting to the specific network environment and to learn from experiences to achieve higher level goals and objectives as defined by quality of Service requirements.

Learning or cognitive development has coined the term cognitive network, which may be based on various types of data available in the network, comprising, for example, performance information, failures, configuration data, network planning data, or user, service, and application related data, as well as from the actions and the corresponding impact of the OAM function itself. The learning and the knowledge built from the learned information may increase the autonomy of the OAM functions.

Turning now to the operator OP inevitably directing her or his visualization module while taking a specific field of view in order to inspect a specific industrial entity PH1 to be processed. Angle and field of view are symbolized in the drawing by two legs of dashed lines emanating from the visualization module VM. While taking a specific field of view and while performing actions - such as entering a sub menu, requesting an exploded view of a machine etc. - an intent of the operator OP may be deducted in order to aim for an intent-based (re-) configuration of quality of service or QoS parameters of the network. A request for an exploded view of a machine, for example, may indicate the operator's intention to repair rather than to configure this machine. An interaction intent dataset created or modified as a result of the detected intent may cause a modification of the quality of service parameters of the network such that the digital twins DT1, DT2 required for repair may be connected instead of a digital twin DT3 required for configuration whereby a bandwidth provided for the digital twins DT1, DT2 may be significantly increased.

The operator OP may refer to both, a human or a non-human operator OP since the present embodiments explicitly do not exclude machines and/or programs with respectively different means for input/output/interaction.

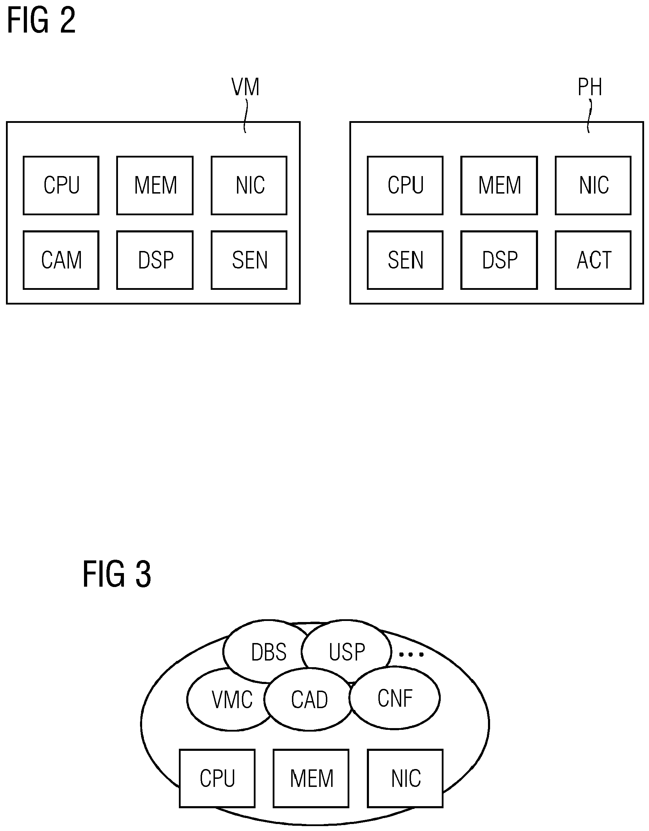

On the left side of FIG. 2 a block diagram of functional elements of an exemplary visualization module VM for generating a scene representation based on an automated analysis of a imaging input is shown.

The visualization module VM may include one or more processors CPU including central processing units and/or graphical processing units and a volatile and/or non-volatile memory storage MEM. The processors CPU and the memory MEM provide means for high dynamics augmented reality computation of received or perceived data with ultralow latency and for generating augmented reality data for a visual representation within the same ultralow latency. The processors CPU may be used to process reality data perception, image frame processing, position and orientation estimation, image processing and overlay image generation, image file wrapping and generation of augmented reality data.

The visualization module VM may include a display DSP such as a head mounted display or HMD for displaying a virtual scene representation to the operator's view, or, for superimposing a virtual scene representation with the operator's real world view. The latter case may be embodied by see-Through glasses of an augmented reality visualization module VM.

The visualization module VM may further include one or more cameras CAM including cameras for capturing visible and invisible optical spectra or thermal imaging systems, Time-of-Flight cameras, etc. The visualization module VM may further include one or more sensors SEN such as positioning sensors using e.g. Bluetooth Low Energy (BLE) signals for acquiring an estimation of an indoor position, infrared sensors for detecting infrared markers in reality, 9-axis inertial sensors, gyro sensors, acceleration sensor, magnetometer, etc. The visualization module VM may further include one or more batteries, a housing and/or special glasses, e.g. honed for extracting the image at respective position of a glass.

The visualization module VM may further include a network interface component NIC for wired or wireless data exchange of the visualization module VM with the - not shown - scene representation control unit controlling the visualization module VM and/or - not shown - further actors attached to the visualization module VM for the purpose of virtually actuating virtual controls in the scene representation as presented by the visualization module VM

The network interface component NIC or wireless access circuitry may generally communicate with the real-world environment to output packetized data of the real-world environment, wherein the wireless access circuitry is configured to transmit the packetized data of the real-world environment data to the - not shown - scene representation control unit wherein the scene representation control unit may execute a program to generate media data and encodes and packetizes the media data to output a stream of encoded media data, wherein the encoded media data provides virtual object data to be superimposed on data of the real-world environment.

The network interface component NIC may receive the stream of encoded media data from the scene representation control unit and pass the media data to the processors CPU where the media data may be decoded and rendered as an overlay on data of the real-world environment in order to eventually display the augmented reality scene on the display DSP of the visualization module VM

An exemplary industrial entity PH is shown on the right side of FIG. 2. The industrial entity PH may, depending on its application, include components similar to the visualization module VM including one or more processors CPU, memory storages MEM, network interface components NIC, sensors, displays and/or actors ACT. While the reader may appreciate that functional components of the industrial entity PH as illustrated in FIG. 2 are essentially identical to the functional components illustrated for the visualization module VM, there are significant differences in the design, which may be attributed to the disproportionately higher computing capacity required to generate and display graphic scene representations in the visualization module VM.

FIG. 3 shows a block diagram of a possible representation of a digital twin. In contrast to other block representations, hardware components for executing the functionality of the digital twin are considered part of the digital twin in the representation of FIG. 3. Hardware components of the digital twin may, depending on its application, include one or more processors CPU, memory storages MEM, network interface components NIC, etc.

A digital twin is a virtual counterpart of an industrial entity PH including a collection of virtual assets being related to one or more industrial entities PH1, PH2, PH3 or things in the industrial environment PEN. The digital twin may contain all required models and parameters so that its behavior is similar to the industrial entity PH.

The digital twin may comprise a set of well aligned, descriptive and executable models such as database entries DBS including physical premises for hosting these database entries DBS. Operations of the digital twin may be virtualized through respective virtual machines, deployed with respective containers VMC or with other kinds of applications. The digital twin may further provide user preferences USP, configuration entries CNF and/or computer aided design models CAD aiding to augment an operator's view of an industrial plant, machine, or device under consideration by an exploded drawing of the industrial plant, machine, or device. The digital twin, finally, may be stored, hosted, or executed in a digital environment DEN which may be, in simple words, a connect-and-compute platform.

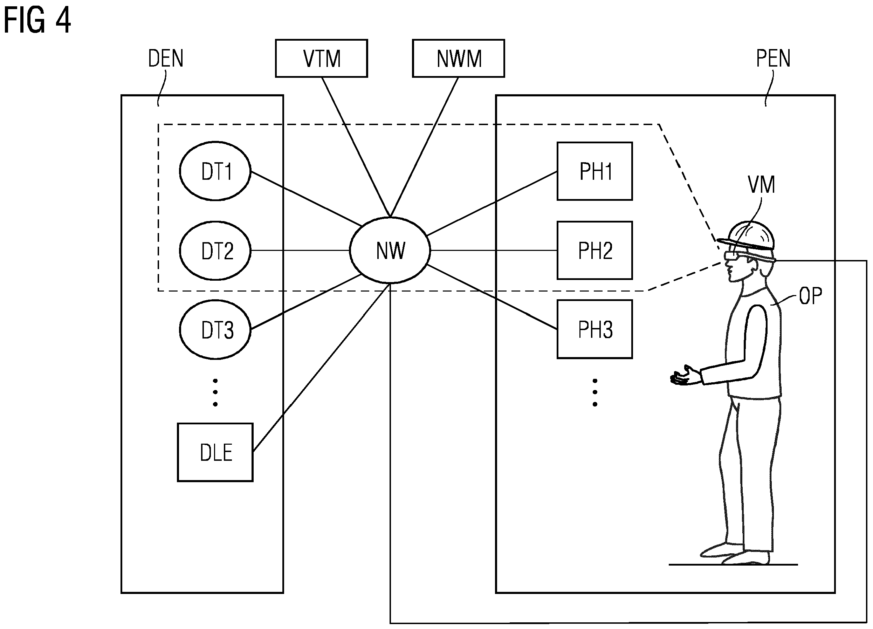

In FIG. 4 a schematic representation of an exemplary interaction system according to the present embodiments. FIG. 4 depicts a functional block diagram of an exemplary interaction system in an industrial environment which, on the one hand, is drawn in more detail and on the other hand also expanded compared to the system of FIG. 1. Like reference signs in FIG. 4 refer to similar components as described in FIG. 1.

An intermediate network NW between the physical industrial environment PEN and the digital environment DEN is no further detailed in FIG. 4. The network NW may be controlled by control plane functions being embodied in a virtualization management module VTM and a network management module NWM.

Further on, a digital management module DLE is depicted in the digital environment DE. The digital management module DLE manages - not shown - digital layers and provides an execution environment for said digital layers.

Digital layer functions executed at least in part by the digital management module DLE may be closely related to one or more digital twins DT1, DT2 and may include executing code, microcode or containers being include in or assigned to a digital twin DT1, DT2. The concept of a digital layer, however, may also be related to a broader range of horizontally distributed functions spread over section boarders of the industrial environment PEN and the digital environment DEN. For example, a microprogram being executed in the visualization module VM on a digital layer level may interact with a program stored in a digital twin DT1 and being executed in the digital environment DEN at the same digital layer level, both cooperating in a distributed function or routine at the digital layer. Networks NW themselves nowadays evolve from a pure transport medium to a distributed functionality organ, in which network devices - not shown - may take on tasks ranging beyond the mere forwarding and/or routing of data packets.

The virtualization management module VTM, for example, may manage an orchestration of virtual machines or containers such as Kubernetes amongst the - not shown - network devices participating in the network NW in order to orchestrate digital layer functions. The network management module NWM may be configured to provide support for policy configurations of control plane functions and for monitoring and enforcement of the policy configurations. The policy configurations may be applied to either slice specific control plane functions or common control plane functions.

In a proposed method for interacting with an industrial system, a scope and intent based (re-)configuration of the network NW for one or more operators OP is described. The method includes interacting with a shared or disjunct set of users or operators OP in a shared physical or industrial environment PEN.

The operator OP may be physically present in the industrial environment while executing a digital layer program. The digital layer program may be executed locally on the at least one visualization module VM assigned to the operator. The visualization module VM may be embodied as an AR-enabled or Artificial-Reality-Enabled user device or, alternatively or additionally, as an AR-service run in an - not shown - edge layer or - not shown - cloud layer of the network NW. Optionally, the visualization module VM may initiate a calibration of the digital layer, e.g., by requesting scanning of visual anchor points in the environment.

A scene representation may be generated based on an automated analysis of a imaging input, e.g. provided by an optical camera - not shown - which may be attached to the visualization module VM. The imaging input may comprise a view of the operator OP in the industrial environment PEN during interacting with the industrial system. The automated analysis may comprise identifying one or more industrial entities PH1, PH2 in the industrial environment. Instead of using optical cameras, RADAR (radio detection and ranging) technologies introduced into regular radio environments may be employed to use regular radio waves emitted by a radiation source to additionally determine the range, distance, angle, and/or radial velocity of objects relative to the radiation source in order to establish an electromagnetic image or scenery of the environment in the invisible range of the electromagnetic spectrum. Both, visible and non-visible imaging methods alone or in combination may be applied and outputs of respective visible and non-visible imaging sensors may be fed into the imaging input to generate a scene representation based on an automated analysis of the imaging input.

Sensors assigned to the visualization module VM may capture or perceive the view of the operator and/or the industrial environment and may transmit signals and/or data relating to the perceived environment to a software instance managing and executing the digital layer for the operator OP. The software instance may be executed in the visualization module VM or, alternatively or cooperatively, on one or more - not shown - computing devices. The computing devices may be located at an edge layer of the network or in a separate cloud or edge cloud attached to the network NW.

The signals and/or data relating to the perceived environment may be processed an instance of the digital layer. Environment and application context may derived, e.g., using machine learning in order to detect type and location of perceived objects.

The industrial entities PH1, PH2 may be correlated with one or more digital twins DT1, DT2, DT3. Each of these digital twins DT1, DT2, DT3, may at least partially model a functionality of the correlated industrial entities PH1, PH2. Said digital twins may be instantiated in the digital environment DEN functionally representing at least parts of the industrial environment PEN.

Consecutively or concurrently, an interaction extent dataset is defined by determining a selection of digital twins DT1, DT2 being correlated with industrial entities PH1 as acquired by the view of the operator. This interaction extent may be described as a scope of the operator OP. An exemplary scope of the operator is symbolized by dashed lines in the drawing. The scope may be defined as a collection of physical entities PH1,PH2 that offer interactions to the operator OP in the active digital layer. Industrial entities PH3 outside the operator's field of vision may be regarded to be out of scope.

Consecutively or concurrently, an interaction intent dataset is defined by extrapolating an anticipated reciprocal functionality of the instantiated twins DT1, DT2 in the digital environment DEN. The interaction intent may be defined as an anticipated future functionality needed in the active digital layer, e.g., certain connectivity or compute resources may be configured based on user behavior/inputs or active applications.

The interaction extent datasets and/or said interaction intent datasets are eventually used for configuring the network NW at least indirectly associating said one or more industrial entities PH1, PH2 with said one or more digital twins DT1,DT2.

To this end, one or more instances in the digital layer hosted by the digital management module DLE may send at least one interaction intent dataset expressing the intent and/or interaction extent dataset expressing the scope to the network management module NWM, which may determine and/or apply necessary (re-)configuration of network and/or computing elements, in the industrial environment, the visualization module VM and/or the (edge) cloud.

Required network reconfigurations may then processed by a network controller being part of the digital management module DLE. The network controller may translate the required changes to configuration parameter sets for the different underlying hardware/software technologies, e.g., configuration of switch ports, VLAN configurations (Virtual Local Area Network) of switches, routers and/or network interfaces, deployment and configuration of virtual network functions.

A reconfiguration of network and/or computing elements may also include that a wireless device-to-device link is configured or established directly between the visualization module VM and industrial entities PH1, PH2 contributing in the interaction.

A reconfiguration of network and/or computing elements may also include that that the industrial entities PH1,PH2 are associated with digital twins DT1,DT2 by a substantially direct logical connection.

According to further possible embodiments, different scenarios are provided in which network and/or computing elements may need to adapt in order to offer necessary digital twin assets to multiple users:
- Multiple operators OP may be interacting with a disjunct set of industrial entities PHI, PH2 in the same industrial environment at the same time.
- Multiple operators OP may be interacting with a shared set of industrial entities PHI, PH2 in the same industrial environment at the same time.
- Multiple operators OP may be interacting with shared set of industrial entities PHI, PH2 in the same environment.
- Multiple operators OP may be in acting in different instances of the same digital layer.
- Some operator tasks may require functions provided by distributed software assets. As an example, an application may require special calculations delivered by another network function. Such additional functionality is also considered as an industrial entity PH3 which may be managed accordingly by the above described interaction system.

In summary, the embodiments relate to an interaction system and a method for interacting with an industrial system, wherein a network at least indirectly associating one or more industrial entities with one or more digital twins is configured using at least a scope and/or an intent of at least one operator.

The industrial system merges the industrial entities with their digital twins thereby providing a common system management and orchestration of physical and digital assets. Digital representations of the digital twins advantageously enable the usage optimization of limited physical representations of the industrial entities.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for interacting with an industrial system, the method including the steps of:
a) generating a scene representation based on an automated analysis imaging input, the imaging input comprising a view of an operator in an industrial environment during interacting with said industrial system, the automated analysis comprising identifying one or more industrial entities in the industrial environment;
b) correlating the one or more industrial entities with one or more digital twins, each of said digital twins at least partially modelling a functionality of the correlated industrial entity, said digital twins being instantiated in a digital environment functionally representing at least parts of the industrial environment;
c) defining an interaction extent dataset by determining a selection of digital twins being correlated with industrial entities as acquired by the view of the operator;
d) defining an interaction intent dataset by extrapolating an anticipated reciprocal functionality of the instantiated digital twins in the digital environment; and;
e) using said interaction extent datasets and/or said interaction intent datasets for configuring a network at least indirectly associating said one or more industrial entities with said one or more digital twins.

2. The method according to claim 1, the network further associating said one or more digital twins with a visualization module for visualizing said scene representation to said operator.

3. The method according to one of the aforementioned claims, wherein in step e), a quality of service or QoS requirement is derived by said interaction extent and said interaction intent and wherein the QoS requirement is compared with system capabilities of said network in order to configure said network.

4. The method according to claim 3, wherein configuring the network includes establishing and adjusting data flows in the network associating said one or more industrial entities with said one or more digital twins.

5. The method according to one of the aforementioned claims, wherein configuring said network includes defining microslices providing an end-to-end logical network through multiple networks

6. The method according to one of the aforementioned claims, wherein configuring said network includes the act of associating said one or more industrial entities with said one or more digital twins by a substantially direct logical connection.

7. The method according to one of the aforementioned claims 2 to 6, wherein configuring said network includes the act of associating the visualization module with one or more industrial entities by a wireless device-to-device-connection.

8. An interaction system including:
- A visualization module for generating a scene representation based on an automated analysis of an imaging input, the imaging input comprising a view of an operator in an industrial environment during interacting with said industrial system, the automated analysis comprising identifying one or more industrial entities in the industrial environment;
- a digital environment for functionally representing at least parts of the industrial environment, said digital environment being adapted for correlating the one or more industrial entities with one or more digital twins being instantiated in said digital environment, each of said digital twins at least partially modelling a functionality of the correlated industrial entity;
- the digital environment further adapted for defining an interaction extent dataset by determining a selection of digital twins being correlated with industrial entities as acquired by the view of the operator and for defining an interaction intent dataset by extrapolating an anticipated reciprocal functionality of the instantiated twins in the digital environment;
- a network controller for using said interaction extent and/or said interaction intent for configuring a network at least indirectly associating said one or more industrial entities with said one or more digital twins.
